# EUROPEAN PATENT APPLICATION

(11) **EP 2 309 226 A1**
(43) Date of publication of application: **13.04.2011**
(21) Application number: 09275091.8
(22) Date of filing: 05.10.2009
(51) Int. Cl.: G01C 21/00, G01S 5/00, G01S 5/14

(54) **Improvements relating to navigation systems**

(71) Applicant: BAE Systems PLC, London SW1Y 5AD (GB)
(72) Inventor: The designation of the inventor has not yet been filed
(74) Representative: Thomas, Michael Andrew

(57) **Abstract**

A positioning device for use with a navigation device, the positioning device comprising input means arranged to receive data signals from a source other than a satellite navigation system; conversion means arranged to convert the received data signals into positional data; and output means arranged to output the positional data for use by the navigation device. The output means outputs the positional data in a communications protocol format, the navigation device is arranged to process the positional data in the communications protocol format.

## Description

### FIELD OF THE INVENTION

The present invention relates to navigation devices. In particular, the invention relates to the use of satellite navigation devices in situations where satellite signals are unavailable or not adequate to allow a satellite navigation device to calculate its location.

### BACKGROUND TO THE INVENTION

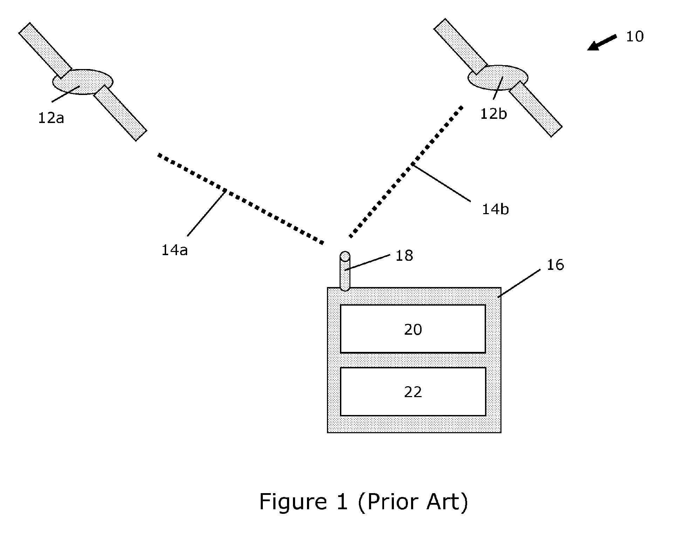

A typical known satellite navigation system 10 is shown in Figure 1. The system 10 comprises a plurality of satellites 12a, 12b and a navigation device 16. Only two satellites are shown for clarity, but in practice, in a given satellite navigation system, there may be many more satellites in orbit around the Earth. Each satellite 12a, 12b transmits a unique radio signal 14a, 14b which is detected by an aerial 18 and processed by a receiver 20. The receiver 20 is engaged with the navigation device 16. Information regarding the position of the device 16 is shown graphically on a screen 22. The graphically displayed information may also include directions (routing) information.

The navigation device 16 may be suitable for route planning and/or navigation. For example, the navigation device 16 may be a TomTom^{®} automotive satellite navigation device which comprises a receiver, aerial and screen for receiving satellite signals and displaying the position of the device 16 and/or a route to a user of the TomTom^{®}.

In practice, a minimum of four satellites must have line-of-sight with the device 16 in order for the receiver 20 to determine its location in three dimensions. In overview, the signal 14a, 14b transmitted by each satellite 12a, 12b contains information on the position of that satellite, which is used by the receiver 20 to calculate its position relative to the satellites 12a, 12b.

Examples of satellite navigation systems which function worldwide, i.e. Global Navigation Satellite Systems (GNSS), are the Global Positioning System (GPS) developed by the United States; the Global Navigation Satellite System (GLONASS) developed by the former USSR and now maintained by Russia; Galileo which is currently being developed by the European Union and the European Space Agency; and Compass which is currently being developed by China. An example of a regional satellite navigation system is the Indian Regional Navigational Satellite System (IRNSS) which is scheduled for completion in 2012.

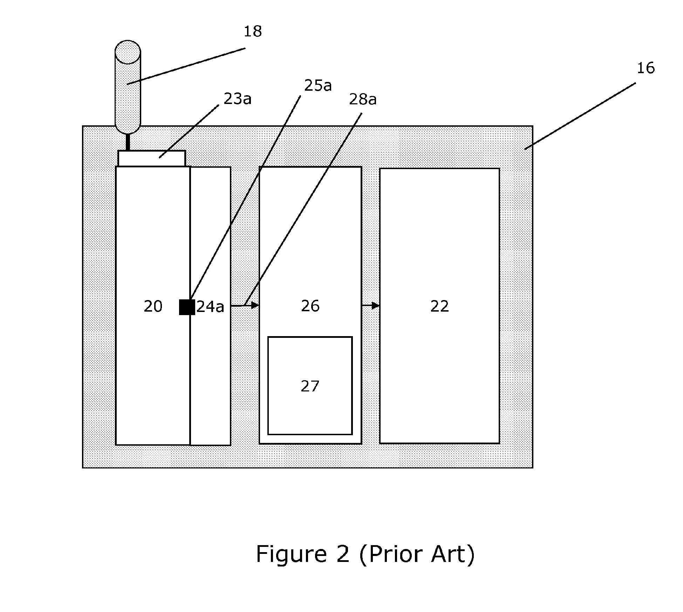

With reference to Figure 2, which shows the device 16 in more detail, the device 16 also comprises a communications port 24a which communicates with the receiver 20. The communications port 24a may comprise a physical connection or alternatively the communications port 24a may be a Bluetooth^{®} or other radio-based terminal, with which the receiver 20 is wirelessly connectable. The receiver 20 comprises input means 23a which is arranged to receive the satellite signals 14a, 14b via the aerial 18, as described above.

In use, the receiver 20 receives input signals from the satellites 12a, 12b and outputs 'raw' positional data 28a. The positional data 28a is transmitted via output means 25a to the communications port 24a which allows data to be transmitted from the receiver 20 to a navigation processing means 26. The positional data 28a relates to the position of the device in a format compatible with the navigation processing means 26. For example, in the National Marine Electronic Association format, NMEA 0183 (NMEA), or a suitable proprietary protocol such as SiRF's proprietary protocol.

The NMEA standard describes the particular fields that must be populated for the positional data 28a to be valid and includes the longitude, latitude, velocity and bearing etc. of the receiver 20 in the positional data 28a. Further information on NMEA can be found at:
http://www.nmea.org/content/nmea standards/nmea 083 v 4 00.asp

The navigation processing means 26 comprises a data store 27 that contains mapping information. The processing means 26 processes the 'raw' positional data 28a so that the position of the device 16 and/or a route is displayed on a map on the screen 22.

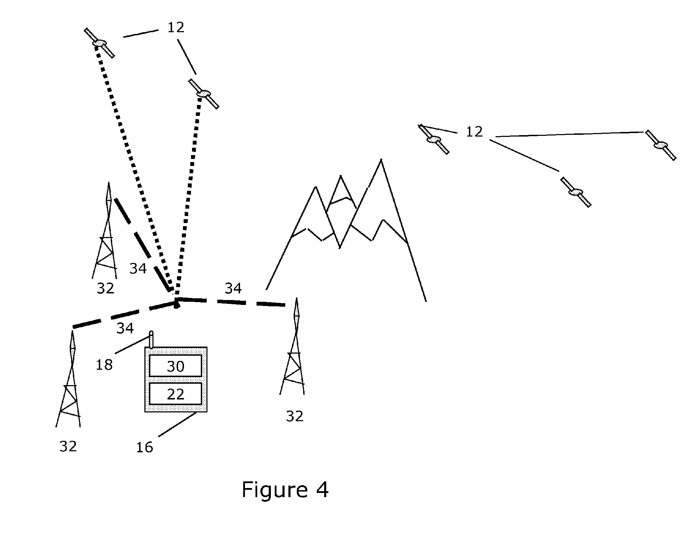

A known problem with satellite navigation systems is the loss of signal from the minimum number of satellites. This may happen when the device 16 is used in a built-up or mountainous area, as discussed later with reference to Figure 4, such that line-of-sight between the minimum number of satellites and the device 16 is not maintained. Similarly, in a woodland environment, trees and their foliage may obscure, refract or otherwise absorb signals 14a, 14b transmitted from the satellites 12a, 12b.

In the above situations, the receiver 20 may be unable to determine the position of the device 16, and so the device 16 may not be able to provide route or positional information to a user of the device 16. This will likely result in delay to the user, or even result in the user becoming lost.

The consequences of a loss of signal may be more serious if, instead of an automotive satellite navigation device, the receiver 20 is part of an emergency hand-held satellite navigation device, say for mountain rescue. Any deterioration or interruption of the signals 14a, 14b from the satellites 12a, 12b may cause a delay resulting in injury or the loss of life.

An alternative method and apparatus that use mobile telephony signals to find a location are disclosed in CSR Plc's International Patent Application Publication No. WO 03/008990. Furthermore, CSR Plc supply a method and apparatus commercially under its eGPS^{®} technology brand which uses mobile telephony signals to calculate the position of a device when GPS signals are weak or unavailable.

However, CSR's method and apparatus requires a database located either in a handset or on a server in a mobile telephone network, which contains base station location data and a timing model of the network.

The apparatus supplied by CSR is not compatible with existing satellite navigation devices. Therefore, it is unable to make use of the functionality of existing satellite navigation systems. Also, eGPS^{®} requires at least a knowledge of the mobile telephone network in which it operates.

### Object of the Invention

It is therefore an objective of the present invention to provide an apparatus and method for using a satellite navigation device when satellite navigation system signals are unavailable. It is also an objective of the invention to provide an improved apparatus and method for overcoming the problem of the unintentional loss or degradation of satellite navigation system signals.

### Summary of the Invention

The invention resides in a positioning device for use with a navigation device, the positioning device comprising input means arranged to receive data signals from a source other than a satellite navigation system; conversion means arranged to convert the received data signals into positional data; and output means arranged to output the positional data for use by the navigation device.

The invention provides a device which can advantageously receive and process non-satellite navigation data signals and convert them into a form which is suitable for processing by a navigation device, such as a TomTom^{®} automotive satellite navigation device. This is particularly useful when adequate satellite signals are unavailable, for example, where due to foliage or geography full reception of satellite signals is not possible.

Preferably, the output means outputs the positional data in a communications protocol format, the navigation device being arranged to process the positional data in the communications protocol format. Navigation devices, such as the TomTom^{®} device mentioned above, are arranged to receive positional data in a particular communications protocol format. The invention may be arranged to output the positional data in the particular protocol format suitable for that navigation device. This means that the navigation device does not detect any difference in the information it receives and therefore continues to operate normally and without interruption.

The communications protocol format is preferably a satellite navigation system communications protocol format. An example of a communications protocol format is the NMEA 0183 (NMEA), discussed above. Alternatively, the communications protocol format may be a proprietary protocol.

Preferably, the received data signals are terrestrial wireless signals, which may comprise one or more of the following: Enhanced Observed Time Difference (E-OTD) signals, cellular mobile signals, radio or television signals, WiFi^{™} signals, or beacon transmitters. Therefore, the received data signals may be obtained from the known or estimated position of particular public radio transmitters or from the broadcast channels of mobile radio base stations or repeater stations.

The invention is particularly advantageous over known positioning devices that use mobile telephony signals or WiFi^{™} signals in that such positioning devices merely identify the cell in which the device is being used, and are thus less accurate than the invention. For example, using terrestrial wireless signals in accordance with the invention enables achievable positioning accuracies of less than ten metres.

Rather than use terrestrial wireless signals, for example, for pedestrian navigation, sensors such as a attitude sensor (digital compass) giving the orientation and heading of a pedestrian may be used, possibly with a digital step counter or accelerometer for measuring the distance travelled. This technique is known as "dead-reckoning". The information can be received as data signals by the positioning device and converted into positional data which may be output for use by the navigation device.

The invention further resides in a navigation device comprising at least one positioning device as described above.

Preferably, the navigation device further comprises at least one communications means to facilitate communication with the at least one positioning device. The one or more of the at least one communications means may be arranged to communicate wirelessly with the at least one positioning device. In a preferred embodiment, one or more of the at least one communications means is a Bluetooth^{®} terminal.

The navigation device may further comprise a receiver for receiving satellite navigation system data signals, wherein the receiver is arranged to generate and output positional data. Preferably, the navigation device comprises receiver communication means to enable communication between the navigation device and receiver.

In a preferred embodiment the navigation device further comprises a processing means arranged to receive and process the positional data. The processing means may comprise a data store containing mapping and route information.

The navigation device may comprise a screen arranged to display the results of the processing of the positional data by the processing means. The processing means may be arranged to combine positional data from a plurality of sources for processing by the processing means.

The invention also resides in a satellite navigation system comprising a navigation device as described above.

According to another aspect of the invention, there is provided a method of determining geographical position, the method comprising receiving non-satellite navigation system data signals; converting the received data signals into positional data for a navigation device; and transmitting the positional data to the navigation device.

Preferably, the positional data is in a communications protocol format, and the navigation device is arranged to process the positional data in the communications protocol format.

The communications protocol format may be in NMEA 0183 (NMEA) format, or the communications protocol format may be a proprietary protocol.

The method may further comprise receiving and processing positional data generated by a receiver for receiving satellite navigation system data signals. Preferably, the method also comprises selecting whether to process the positional data or the positional data generated by the receiver.

In a preferred embodiment, the method further comprises monitoring the flow of at least one of the positional data and the positional data generated by the receiver. The method may therefore also comprise processing either the positional data or the positional data generated by the receiver in the event that, respectively, the flow of the positional data generated by the receiver or the flow of the positional data stops.

A consequence of the above apparatus and method is that navigation devices dependent on satellite signals are able to operate at higher update rates, by virtues of not being limited to satellite navigation algorithms and protocols, which typically operate at 1Hz. The update rate of the positional data for use with the navigation device is only limited by the chosen baud rate of the navigation device. The applicant has found that update rates can rise to approximately 20Hz when mobile cellular signals are used, or over 50Hz using MW radio waves. This advantageously provides faster and more accurate positioning of the navigation device.

These fields can be populated using a method other than GPS, such as a terrestrial radio positioning system. Accordingly, any device expecting input from a GPS receiver can therefore take NMEA strings populated by non GPS transmitters and operate as normal.

### Brief Description of the Figures

Apparatus and methods of using the apparatus according to preferred embodiments of the present invention will now be described by way of example, with reference to the accompanying drawings in which:
Figure 1 is a diagram showing a known satellite navigation system comprising a plurality of satellites and a navigation device, according to the prior art;
Figure 2 is a diagram showing the navigation device of Figure 1 in more detail;
Figure 3 is a diagram of the navigation device, wherein a positioning device according to a first embodiment of the present invention is engaged with the device;
Figure 4 is a diagram illustrating the first embodiment of the present invention in use; and
Figure 5 is a diagram of a positioning device according to a further embodiment of the present invention and a satellite navigational receiver, wherein the positioning device and the receiver are both engaged with a satellite communications device.

### Detailed Description of Preferred Embodiment

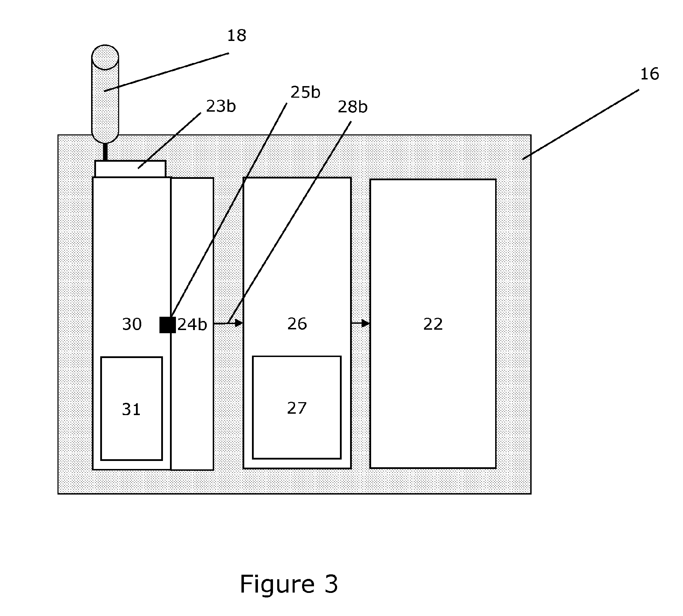

Figure 3 shows a navigation device 16 generally as previously described. However, a positioning device 30 according to an embodiment of the invention is engaged with the navigation device 16, rather than the receiver 20. Instead of using satellite signals to determine position, the positioning device 30 is arranged to receive mobile telephony signals 34, for example GSM, W-CDMA or UMTS signals, from mobile telephone base stations 32, as illustrated in Figure 4. The positioning device 30 estimates its location using multilateration positioning techniques on the signals 34.

In an alternative embodiment of the invention, the positioning device 30 may use television signals to determine its approximation. For example, Rosum, a company based in the US, provides apparatus which use television signals to determine location.

The positioning device 30 comprises input means 23b which is arranged to receive the telephony signals via the aerial 18. The positioning device 30 also comprises conversion means 31 which calculates the position of the positioning device 30 from the mobile telephony signals 34, and converts the results of those calculations into positional data 28b. The positional data 28b is transmitted via output means 25b to a communications port 24b. The positional data 28b is in a communications protocol format, such as NMEA format which, as mentioned above, is a format that the processing means 26 is configured to receive. The format of the positional data 28b generated by the positioning device 30 is identical to the format of the positional data 28a generated by the receiver 20 in the example of Figure 1. Consequently, the processing means 26 receives and processes the positional data 28b generated by the positioning device 30 in exactly the same way as if it is positional data 28a generated by the receiver 20, and calculates a route and/or data for display on the screen 22.

In an alternative embodiment, the positioning device 30 calculates its position from a single mobile telephone base station 32. Since the location of the single base station 32 is known and transmitted to the positioning device 30, the positioning device 30 can calculate the cell in which it is located and therefore approximate the position of the device 16.

In alternative embodiments of the invention, other methods, such as Enhanced Observed Time Difference (E-OTD) may be used by the positioning device 30 to determine its position. The positioning device 30 may also determine positional information from audio radio signals, for example, AM medium wave radio signals, television signals, WiFi^{™} signals, non-navigation satellite system signals or signals broadcast by dedicated beacons placed by the user.

In a further alternative embodiment, any signal containing some known code word (such as a synchronisation or identification marker) can be used to calculate the position of the positioning device 30. In this further alternative embodiment, the positioning device 30 measures the arrival times of these known code words within each broadcast to its position.

In the above embodiments of the invention, the positioning device 30 determines its location using non-satellite data signals 34, for example, from a terrestrial wireless network. This is in contrast to a satellite navigation system 10 which is a space-based wireless network. In the above embodiments, the positioning device 30 converts the non-satellite data signals 34 into positional data 28b relating to the position of the device 16 in a format compatible with the navigation processing means 26, and transmits that data to the navigation processing means 26.

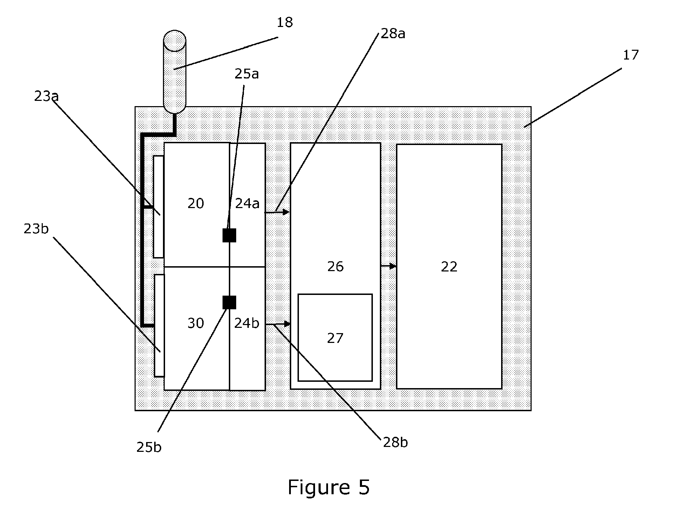

The positioning device 30 may work in tandem with a receiver 20 as described above. As illustrated in Figure 5, an alternative navigation device 17 comprises a first communications port 24a and a second communications port 24b, and the receiver 20 and the positioning device 30 are respectively engaged in each port.

As described above, the receiver 20 processes information from satellite signals 14a, 14b in a satellite navigation system 10 and produces first positional data 28a which is transmitted to the processing means 26. Concurrently, the positioning device 30 processes non-satellite data signals 34 from a terrestrial wireless network and produces second positional data 28b which is transmitted to the processing means 26. The processing means 26 calculates a route and/or the position of the device 17 from the first positional data 28a and the second positional data 28b, for display on the screen 22.

Typically, the receiver 20 updates at a rate of 1Hz and the positioning device 30 updates at a rate in excess of 10Hz. However, if the alternative device 17 cannot get an adequate signal from the satellite network, similarly to the device 16 shown in Figure 4, the processing means 26 of the alternative device 17 may calculate a route and/or the position of the device 16 from the second positional data 28b only.

Alternatively, both the receiver 20 and the positioning device 30 may engage with a single communications port (not shown). The single communications port combines the data obtained from both the receiver 20 and the positioning device 30 into a single positional data stream which is sent to the processing means 26.

In yet a further embodiment (not shown), a first positioning device (i.e. a positioning device 30) and a second positioning device (i.e. a further positioning device 30) are engaged with the alternative device 17. The first positioning device processes data from a mobile telephone network, which operates concurrently with a second positioning device that processes different non-satellite data signals, for example, from another terrestrial wireless network.

In any of the above embodiments, one or more of the communications ports 24a, 24b may be wirelessly engageable with the receiver 20 or positioning device 30.

In general, it will be clear to the skilled person that the present invention may be embodied in other specific forms without departing from its essential attributes. Accordingly, reference should be made to the appended claims and other general statements herein rather than to the foregoing specific description as indicating the scope of the invention.

## Claims

1. A positioning device (30) for use with a navigation device (16), the positioning device (30) comprising:
input means (23b) arranged to receive data signals (34) from a source other than a satellite navigation system (10);
conversion means (31) arranged to convert the received data signals (34) into positional data (28b); and
output means (25b) arranged to output the positional data (28b) for use by the navigation device (16).

2. The positioning device (30) according to claim 1, wherein the output means (25b) outputs the positional data (28b) in a communications protocol format, the navigation device (16) being arranged to process the positional data (28b) in the communications protocol format.

3. The positioning device (30) according to claim 2, wherein the communications protocol format is a satellite navigation system communications protocol format.

4. The positioning device (30) according to any preceding claim, wherein the received data signals (34) are terrestrial wireless signals.

5. The positioning device (30) according to claim 4, wherein the received wireless data signals (34) comprise one or more of the following: Enhanced Observed Time Difference (E-OTD) signals, cellular mobile signals, radio or television signals, WiFi^{™} signals, or beacon transmitters.

6. A navigation device (17) comprising at least one positioning device (30) as claimed in any preceding claim.

7. The navigation device (17) according to claim 6, further comprising at least one communications means (24b) to facilitate communication with the at least one positioning device (30).

8. The navigation device (17) according to claim 7, wherein the at least one communication means is arranged to combine positional data (28b) from a plurality of sources.

9. The navigation device (17) according to claim 7 or 8, wherein one or more of the at least one communications means (24b) is arranged to communicate wirelessly with the at least one positioning device.

10. The navigation device (17) according to any of claims 6 to 9, further comprising a receiver (20) for receiving satellite navigation system data signals (14a, 14b), wherein the receiver (20) is arranged to generate and output positional data (28a).

11. The navigation device (17) according to any of claims 6 to 10, further comprising a processing means (26) arranged to receive and process the positional data (28a, 28b).

12. The navigation device (17) according to claim 11, wherein the processing means (26) is arranged to combine positional data (28b) from a plurality of sources.

13. A method of determining geographical position, the method comprising:
receiving non-satellite navigation system data signals (34);
converting the received data signals (34) into positional data (28b) for a navigation device (16, 17); and
transmitting the positional data (28b) to the navigation device (16, 17).

14. The method according to claim 13, wherein the positional data (28b) is in a communications protocol format, and the navigation device (16, 17) is arranged to process the positional data (28b) in the communications protocol format.

15. The method according to claim 14, the method further comprising receiving and processing positional data (28a) generated by a receiver (20) for receiving satellite navigation system data signals (14a, 14b)
